# EUROPÄISCHE PATENTSCHRIFT

(11) **EP 0 732 514 B1**
(45) Veröffentlichungstag und Bekanntmachung des Hinweises auf die Patenterteilung: **06.02.2002**
(21) Anmeldenummer: 96103236.4
(22) Anmeldetag: 02.03.1996
(51) Int. Cl.: F16B 2/14

(54) **Halterung für eine Hebe- und Tragvorrichtung**
Fixing element for a lift device and a support device
Elément de fixation entre un dispositif de élevage et un dispositif de support

(30) Priorität: 11.03.1995 DE 29504251 U
(43) Veröffentlichungstag der Anmeldung: 18.09.1996
(73) Patentinhaber: Aacurat GmbH, 73430 Aalen (DE)
(72) Erfinder: Speich, Helmut, 73460 Hüttlingen (DE); Rockinger, Ralf, 73450 Neresheim-Dorfmerkingen (DE)
(74) Vertreter: Jackisch-Kohl, Anna-Katharina

(56) Entgegenhaltungen:
- CA-A- 905 078
- NL-C- 32 812

## Beschreibung

Die Erfindung betrifft eine Halterung für eine Hebe- und Tragvorrichtung nach dem Oberbegriff des Anspruches 1.

Es sind Halterungen dieser Art bekannt, bei denen der Gegenhalter an einer Tragsäule eines Hebekranes für die behinderte Person in einer gewünschten Höhe befestigt wird. Der Halter ist an einer Wand verschraubt. Der Gegenhalter wird mit einem über die Tragsäule horizontal abstehenden Steckteil von oben in die Einstecköffnung des Halters eingesetzt. Das Ausrichten des Gegenhalters gegenüber dem Halter ist relativ umständlich und zeitaufwendig, da das Steckteil mit seinen Seitenwänden genau fluchtend zur Einstecköffnung ausgerichtet werden muß.

Bei einer anderen bekannten Halterung (CA 905 078 A) weist der Gegenhalter über seine Rückseite abstehende Stege auf, die einen schwalbenschwanzförmigen Steckteil bilden. Mit ihm wird der Gegenhalter in eine schwalbenschwanzförmige Einhängeöffnung des Halters gesteckt. Die Einhängeöffnung wird durch zwei Stege gebildet, die unter jeweils einem spitzen Winkel von einer Rückwand des Halters abstehen. Der Gegenhalter muß sehr genau gegenüber dem Halter ausgerichtet werden, um den Stegteil in die Einhängeöffnung einsetzen zu können. Zur Montage des Gegenhalters am Halter muß der Steckteil fluchtend zu den Stegen des Halters ausgerichtet werden, wodurch die Montage umständlich und zeitaufwendig ist.

Der Erfindung liegt die Aufgabe zugrunde, die gattungsgemäße Halterung so auszubilden, daß der Gegenhalter einfach und zuverlässig in den Halter eingeführt werden kann.
Diese Aufgabe wird bei einer Halterung der gattungsbildenden Art erfindungsgemäß mit den kennzeichnenden Merkmalen des Anspruches 1 gelöst. Bei der erfindungsgemäßen Halterung bildet die Einführnase des Steckteiles bzw. die Führungsfläche des Halters eine Einführhilfe, durch welche sich der Gegenhalter mühelos in den Halter stecken läßt. Der Gegenhalter muß beim Steckvorgang nicht genau gegenüber dem Halter ausgerichtet sein. Die Einführnase bzw. Führungsfläche sorgt dafür, daß der Gegenhalter zwangsläufig gegenüber dem Halter ausgerichtet wird. Dadurch sind aufwendige Ausrichtmaßnahmen bei der Montage des Gegenhalters nicht erforderlich. Die Montage ist dadurch äußerst einfach, so daß sie in kürzester Zeit und ohne besondere Geschicklichkeit durchgeführt werden kann.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: eine erfindungsgemäße Halterung mit einem Gegenhalter und einem Halter in perspektivischer und in explosiver Darstellung,
- Fig. 2: die Halterung nach Fig. 1 beim Anlegen des Gegenhalters an einer Wand in Ansicht und teilweise im Schnitt,
- Fig. 3: die Halterung nach Fig. 1 in einem Schnitt längs der Linie III-III in Fig. 2 und teilweise in Ansicht in Richtung des Pfeiles P in Fig. 2,
- Fig. 4: zwei Einführnasen eines Gegenhalters einer weiteren Ausführungsform einer erfindungsgemäßen Halterung, teilweise in Rückansicht und teilweise im Vertikalschnitt,
- Fig. 5: eine dritte Ausführungsform einer erfindungsgemäßen Halterung in einer Darstellung entsprechend Fig. 1,
- Fig. 6: eine weitere Ausführungsform eines Halters einer erfindungsgemäßen Halterung in perspektivischer Darstellung,
- Fig. 7: in perspektivischer Darstellung eine weitere Ausführungsform eines Gegenhalters der erfindungsgemäßen Halterung,
- Fig. 8: eine Ansicht in Richtung des Pfeiles VIII in Fig. 7.

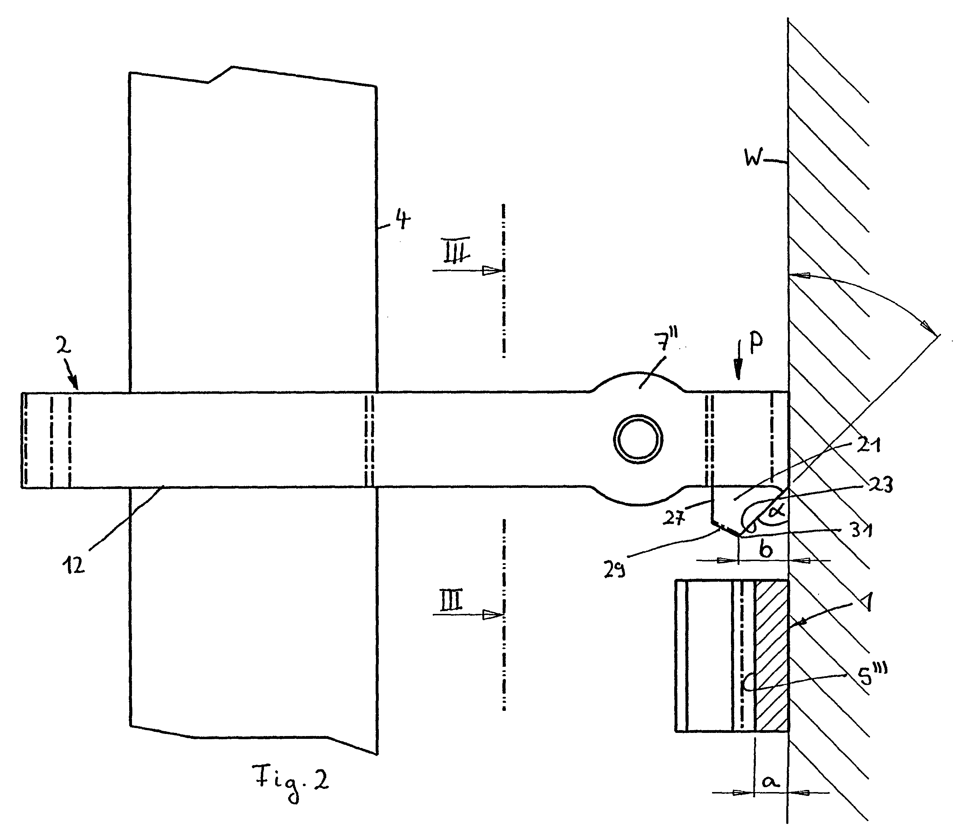

Die in den Zeichnungen dargestellte Halterung 1, 2 dient zum Befestigen einer (nicht dargestellten) Hebe- und Tragvorrichtung für kranke und behinderte Personen an einer Wand W (Fig. 2). Die Halterung besteht aus einem Halter 1, der an der Wand W befestigt wird, und einem Gegenhalter 2, der höhenverstellbar an einer Säule 4 der Hebe- und Tragvorrichtung vorgesehen ist. Die Tragvorrichtung ist beispielsweise ein Hebekran, wie er in Krankenhäusern oder dergleichen zum Umsetzen gehbehinderter und schwerkranker Patienten verwendet wird.

Der Halter 1 ist ein länglicher, im Querschnitt rechtekkiger Balken mit einer schwalbenschwanzförmigen Einhängeöffnung 5 für die Schenkelenden 14, 15 des Gegenhalters 2. Sie bilden ein Steckteil, mit dem der Gegenhalter 2 im Halter 1 arretiert werden kann. Die Einhängeöffnung 5 liegt mittig zum Halter 1 und erstreckt sich vorzugsweise über dessen ganze Höhe und über mehr als Dreiviertel der Länge des Halters 1. Beidseitig der Einhängeöffnung 5 weist der Halter 1 zwei gleich ausgebildete Enden 8, 9 mit jeweils einer Durchgangsöffnung 10 und 11 auf, in die z. B. ein Befestigungsmittel, wie eine Schraube oder dergleichen, gesteckt werden kann, um den Halter an der Wand zu befestigen. Die Einhängeöffnung 5 ist seitlich von spitzwinklig zu ihrem Boden 5"' verlaufenden Seitenwänden 5' und 5'' begrenzt.

Der Gegenhalter 2 hat ein Ringteil 12 mit einer Durchführöffnung 13 für die Säule 4. Vom Ringteil 12 stehen die parallel zueinander verlaufenden Schenkel 6, 7 radial ab, die die Schenkelenden 14, 15 aufweisen. Die Schenkel 6, 7 liegen mit dem Ringteil 12 in einer Ebene. Die Schenkelenden 14, 15 sind so dreieckförmig nach außen verbreitert, daß sie formschlüssig in die schwalbenschwanzförmige Öffnung 5 des Halters 1 passen. Die Schenkelenden 14, 15 haben stumpfwinklig an die Außenseiten der Schenkel anschließende Außenflächen 14' und 15', die mit den Stirnflächen 14'' und 15'' der Schenkelenden einen gleichen Winkel einschließen wie der Öffnungsboden 5''' mit den Seitenwänden 5' und 5''. Die Innenflächen 14''' und 15''' der Schenkelenden liegen in gleicher Ebene wie die Innenseiten 6' und 7' der Schenkel 6, 7 und senkrecht zu den Stirnflächen 14'' und 15''.

Im Bereich vor dem Schenkelende 15 hat der Schenkel 7 eine Gewindeöffnung 17, in die ein (nicht dargestellter) Arm eines Betätigungshebels zum Aufspreizen der Schenkel innerhalb der Einhängeöffnung 5 schraubbar ist. Die am Schenkel 7 vorgesehene Öffnung 17 liegt in einem teilkreisförmig nach oben und unten verbreiterten Schenkelabschnitt 7'', der in das Schenkelende 15 übergeht. Der Arm ist durch einen kürzeren Schenkel eines etwa L-förmigen Betätigungshebels gebildet, dessen anderer Schenkel als Handhabe beim Drehen des Hebels dient. Der Arm hat einen Gewindeteil, mit dem er in der Gewindeöffnung 17 gehalten ist. Das freie Ende des Armes stützt sich an der gegenüberliegenden Innenseite 6' des Schenkels 6 in montierter Lage ab.

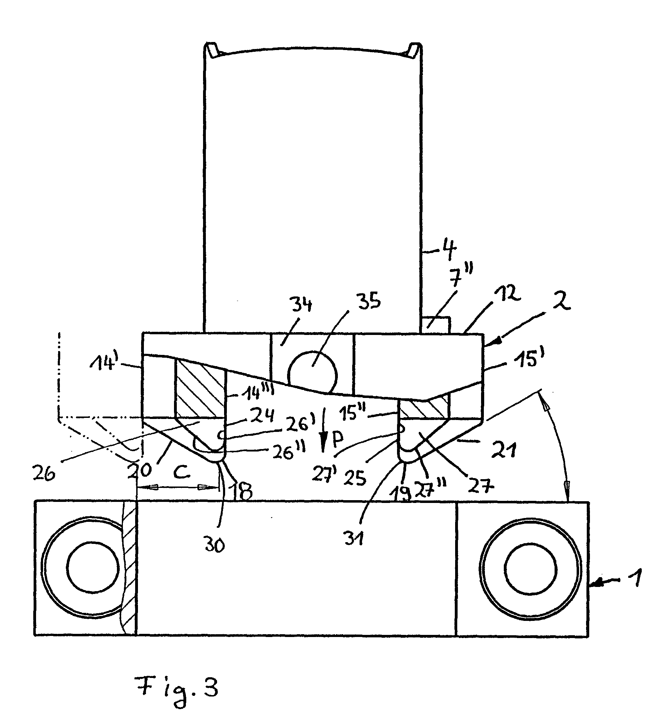

Um das Einführen der Schenkelenden 14, 15 in die Halteröffnung 5 zu erleichtern, weisen diese nach unten ragende Einführnasen 18, 19 auf. Sie sind spiegelsymmetrisch zueinander ausgebildet. Die Einführnasen weisen schräg in Richtung zueinander verlaufende Außenseiten 20, 21 auf, die sich von den Außenseiten 14', 15' der Schenkelenden 14, 15 aus erstrecken. Da die Außenseiten 14', 15' ebenfalls in Richtung zueinander geneigt verlaufen, sind die Außenseiten 20, 21 der Einführnasen 18, 19 auch schräg zur Längsrichtung der Schenkel 6, 7 geneigt. Wie Fig. 3 zeigt, liegen die Außenseiten 20, 21 der Einführnasen 18, 19 stumpfwinklig zu den Außenseiten 14', 15' der Schenkelenden 14, 15. Die Außenseiten 20, 21 der Einführnasen 18, 19 sind am Übergang zu den Außenseiten 14', 15' der Schenkelenden 14, 15 gleich breit wie diese (Fig. 2) und verjüngen sich von den Schenkelenden 14, 15 aus.

Die Außenseiten 20, 21 gehen spitzwinklig in eine Stirnseite 22, 23 der Einführnasen 18, 19 über (Fig. 2). Die Stirnseiten 22, 23 liegen unter einem Winkel α zur Wand W und sind eben ausgebildet. Die Stirnseiten 22, 23 beider Einführnasen 18, 19 liegen flüchtend zueinander und schließen stumpfwinklig an die Ebenen Stirnflächen 14", 15'' der Schenkelenden 14, 15 an.

Die Außenseiten 20, 21 der Einführnasen 18, 19 erstrekken sich bis zu den einander zugewandten Innenseiten 24, 25 der Einführnasen 18, 19 (Fig. 3). Die Innenseiten 24, 25 sind eben und liegen parallel zueinander sowie in einer Ebene mit den ebenen, einander zugewandten Innenseiten 14'', 15'' der Schenkelenden 14, 15. Die Außenseiten 20, 21 der Einführnasen 18, 19 gehen abgerundet in die Innenseiten 24, 25 über.

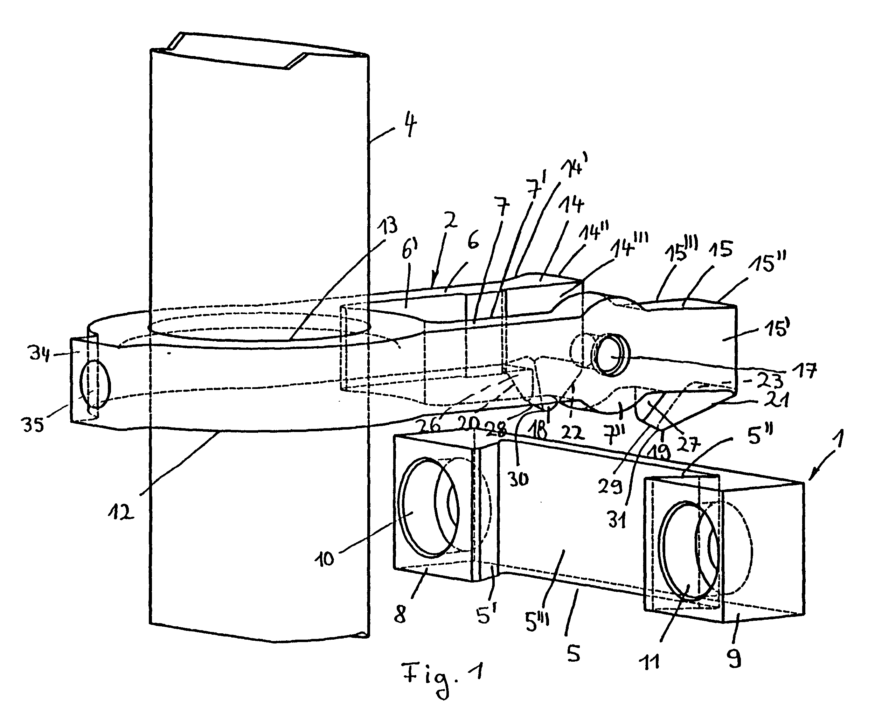

Wie sich aus den Fig. 1 bis 3 ergibt, sind die Stirnseiten 22, 23 der Einführnasen 18, 19 so geneigt, daß der untere Rand 30, 31 der Stirnseiten, wenn die Schenkelenden 14, 15 mit ihren Stirnseiten 14'', 15'' an der Wand W anliegen (Fig. 2), einen Abstand b von der Wand W hat, der größer ist als die Dicke a des Bodens 5''' der Einhängeöffnung 5 des Halters 1. Der in Fig. 2 untere Rand 28, 29 der Außenseiten 20, 21 der Einführnasen 18, 19 ist, in Seitenansicht gemäß Fig. 2 gesehen, schräg aufwärts gerichtet und liegt stumpfwinklig zu der von der Wand W abgewandten Stirnseite 26, 27 der Einführnasen 18, 19. Die Stirnseiten 26, 27 sind eben ausgebildet und schließen senkrecht an die Unterseite der Schenkelenden 14, 15 an. Die beiden Stirnseiten 22, 26 und 23, 27 der Einführnasen konvergieren in Richtung auf die unteren Ränder 30, 31. Die dem Ringteil 12 zugewandten Stirnseiten 26, 27 haben dreieckförmigen Umriß (Fig. 3). Mit ihrem einen Rand 26', 27' liegen sie in den Innenseiten 24, 25 der Einführnasen 18, 19. Dieser Rand 26', 27' liegt senkrecht zur Unterseite der Schenkelenden 6, 7 und geht abgerundet in einen Rand 26'', 27'' über, der sich bis zu den voneinander abgewandten Außenseiten 14', 15' der Schenkelenden 14, 15 erstreckt.

Mit Hilfe der Einführnasen 14, 15 läßt sich der Gegenhalter 2 mühelos in den Halter 1 einsetzen. Der Gegenhalter 2 wird mit den ebenen Stirnseiten 14'', 15'' seiner Schenkelenden 14, 15 im Bereich oberhalb des Halters 1 an die Wand W angelegt (Fig. 2). Anschließend wird der Gegenhalter 2 in Pfeilrichtung P nach unten verschoben.

Die Einführnasen 18, 19 gelangen dabei mit ihren schrägen Außenseiten 20, 21 an die schrägen Seitenwände 5', 5'' der Einhängeöffnung 5 und führen die Schenkelenden 14, 15 zuverlässig in die Einhängeöffnung.

Der Gegenhalter 2 wird auf diese Weise einwandfrei in die Einführöffnung 5 geführt. Der Einführvorgang wird dadurch besonders erleichtert, daß die unteren Ränder 30, 31 der Einführnasen 18, 19 in einem Abstand b von der Wand W liegen, der größer ist als die Dicke a des Bodens 5''' der Einhängeöffnung 5. Die schrägen, unter dem Winkel α zur Wand W liegenden Stirnseiten 22, 23 der Einführnasen 18, 19 gelangen dadurch auf den oberen Rand des Bodens 5''' und tragen dadurch zusammen mit den schräg liegenden Außenseiten 20, 21 dazu bei, daß der Gegenhalter 2 zwangläufig in die Einhängeöffnung 5 des Halters 1 gelangt.

Selbstverständlich muß der Gegenhalter 2 beim Einsetzen in den Halter 1 nicht an die Wand W angesetzt werden. Die Einführnasen 18, 19 gewährleisten auch dann eine zuverlässige Montage, wenn der Gegenhalter 2 ohne Wandberührung von oben in den Halter 1 eingesetzt wird.

Das Ringteil 12 des Gegenhalters 2 umgibt die Säule 4 vollständig. Auf der von den Schenkeln 6, 7 abgewandten Seite hat das Ringteil 12 einen Fortsatz 34 mit einer radialen Öffnung 35, durch die zum Arretieren des Gegenhalters 2 in einer bestimmten Höhe an der Säule 4 ein Befestigungsteil, wie eine Schraube oder dergleichen, gesteckt werden kann.

Nachdem der Gegenhalter 2 in der oben beschriebenen Weise im Halter 1 arretiert ist, kann er durch Auseinanderspreizen der Schenkel 6, 7 gegenüber dem Halter 1 verspannt werden. Hierzu wird der Betätigungshebel mit seinem Arm in die Gewindeöffnung 17 geschraubt, wobei sich der Arm mit seinem freien Ende am Schenkel 6 abstützt.

Dabei werden die Schenkel 6, 7 leicht auseinandergedrückt und dadurch in der Öffnung 5 des Halters 1 verklemmt. Somit ist auf einfache Weise ein sicherer Halt des Gegenhalters 2 im Halter 1 erreicht.

Die relativ große Breite c (Fig. 3) der Einführnasen 18, 19, senkrecht zur Längsachse der Schenkel 6, 7 gemessen, gewährleistet, daß der Gegenhalter 2 auch dann noch leicht in die Halteröffnung 5 eingeführt werden kann, wenn er zu ihr in seitlich versetzter Lage angesetzt wird. Der seitliche Versatz darf jedoch nicht größer als das Maß c sein, weil dann die eine Einführnase 18 bzw. 19 im Bereich neben den Halter 1 liegt und keine Zentrierwirkung mehr ausüben kann.

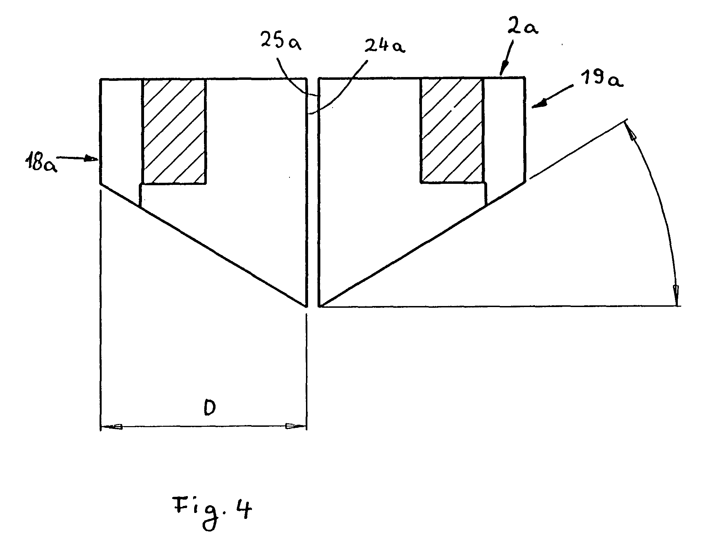

Bei einer weiteren Ausführungsform (Fig. 4) sind die Einführnasen 18a, 19a des Gegenhalters 2a so nach innen verbreitert, daß ihre ebenen Innenseiten 24a, 25a nur geringen Abstand voneinander haben. Die maximale Breite D der Einführnasen 18a, 19a entspricht nahezu der halben Breite der Einhängeöffnung des Halters. Dadurch kann der seitliche Versatz des Gegenhalters 2a beim Ansetzen gegenüber dem Halter größer sein als bei der zuvor beschriebenen Ausführungsform. Im übrigen entspricht diese Ausführungsform dem vorigen Ausführungsbeispiel.

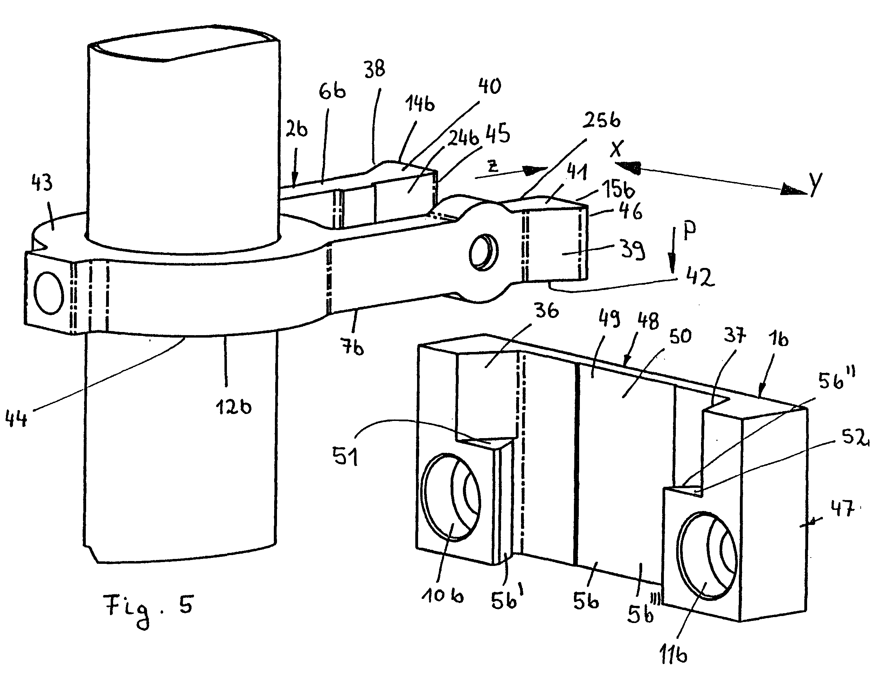

Die Ausführungsform gemäß Fig. 5 unterscheidet sich im wesentlichen dadurch von der Ausführungsform nach den Fig. 1 bis 4, daß der Gegenhalter 2b keine Einführnasen aufweist. Am Halter 1b sind zur einfachen Ausrichtung des Gegenhalters 2b gegenüber dem Halter Einführschrägen 36, 37 vorgesehen, die durch Seitenwände einer Einführöffnung 50 in einem oberen Halterteil 48 vorgesehen sind.

Die Schenkelenden 14b, 15b der Schenkel 6b, 7b des Gegenhalters 2b sind bis auf die fehlenden Einführnasen gleich ausgebildet wie die Schenkelenden 14, 15 des Gegenhalters 2. Sie haben in Draufsicht (Fig. 5) etwa Trapezform mit zueinander parallelen Innenseiten 24b, 25b und v-förmig nach außen verlaufenden Außenflächen 38, 39. Die ebenen Ober- und Unterseiten 40, 41 und 42 der Schenkelenden 14b, 15b liegen in einer Ebene mit der ebenen Ober- und Unterseite 43, 44 des Ringteiles 12b und der Schenkel 6b und 7b. Die ebenen Stirnflächen 45, 46 der Schenkel 14b, 15b liegen auf gleicher Höhe und verlaufen senkrecht zu den Ober- und Unterseiten.

Der Halter 1b entspricht in seinem unteren Teil 47 dem Halter 1 gemäß den Fig. 1 bis 3. Der obere Halterteil 48 hat nur die Einführöffnung 50, die mit der Einhängeöffnung 5b im unteren Halterteil 47 fluchtet. Die Einführöffnung 50 hat eine Rückwand 49, die eine Fortsetzung der Rückwand 5b''' der Einhängeöffnung 5b ist. Die Seitenwände bzw. Einführschrägen 36, 37 schließen mit der Rückwand 49 jeweils einen stumpfen Winkel ein. Die von der Rückwand 5b''' bis zur Stirnseite divergierenden ebenen Einführschrägen 36, 37 schließen über jeweils eine senkrecht zu ihnen liegende Schulterfläche 51 und 52 an die Seitenwände 5b' und 5b'' der Einhängeöffnung 5b an. Im Ausführungsbeispiel ist der obere Halterteil 48 etwa gleich hoch wie der untere Halterteil 47. Durch die Einführschrägen 36, 37 verbreitert sich die Einführöffnung 50 nach vorne, so daß der Gegenhalter 2b auch bei seitlich versetzter Lage zum Halter 1b einfach eingesetzt werden kann. Durch die Einführschrägen 36, 37 wird beim Anlegen der Schenkelenden 14b, 15b des Gegenhalters an der Rückwand 49 der Einführöffnung und beim Verschieben in Richtung des Pfeiles P der Gegenhalter 2b gegenüber dem Halter 1b in x-y-Richtung ausgerichtet, so daß er in die Einhängeöffnung 5b des Halterteiles 47 einfach eingeschoben werden kann. Die Ausrichtung des Gegenhalters 2b in z-Richtung erfolgt durch die Anlage der Stirnseiten 45, 46 der Schenkelenden 14b, 15b an der Rückwand 49 des oberen Halterteiles 48.

Der nach oben verlängerte Halterteil 48 mit den Einführflächen bzw. -schrägen 36, 37 gewährleistet, daß der Gegenhalter 2b beim Einführen in den Halter 1b in x- und y-Richtung zwangläufig gegenüber dem Halter ausgerichtet ist. Beim Einschieben in Richtung z stößt der Gegenhalter 2b mit seinen Stirnflächen 45, 46 an der Rückwand 49 an, so daß der Gegenhalter 2b gegenüber dem Halter 1b einwandfrei ausgerichtet ist. Er kann dann ohne weitere Ausrichtung einfach in die Einhängeöffnung 5b des Halters nach unten bewegt werden. Die Durchgangsöffnungen 10b, 11b liegen im unteren Halterteil 47.

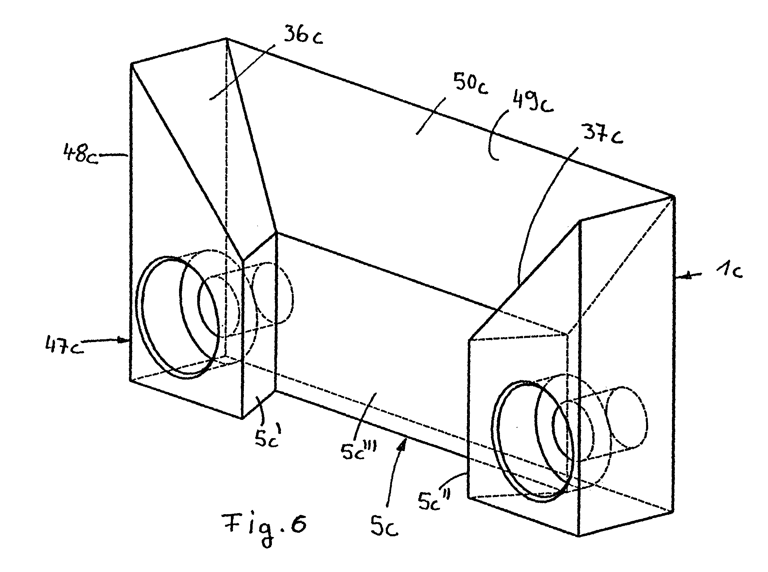

Bei der Ausbildung gemäß Fig. 6 unterscheidet sich nur der Halter 1c von der zuvor beschriebenen Ausführungsform. Die Rückwand 49c sowie die Seitenwände 36c und 37c der Einführöffnung 50c des oberen Halterteiles 48c sind trichterartig nach außen und oben geneigt. Diese Wände schließen mit den entsprechenden Wänden 5c' bis 5c''' der Einhängeöffnung 5c jeweils einen stumpfen Winkel ein. Durch diese Ausbildung wird auf einfache Weise erreicht, daß der Gegenhalter beim Einführen in den Halter 1c zwangläufig in die richtige Lage gegenüber dem unteren Halterteil 47c ausgerichtet wird. Dadurch kann der Gegenhalter problemlos und in kurzer Zeit im Halter 1c montiert werden.

Die beschriebenen Ausführungsbeispiele können derart kombiniert werden, daß bei den Ausführungsformen nach den Fig. 1 bis 4 anstelle der dort beschriebenen Halter einer der Halter gemäß den Fig. 5 oder 6 verwendet wird.

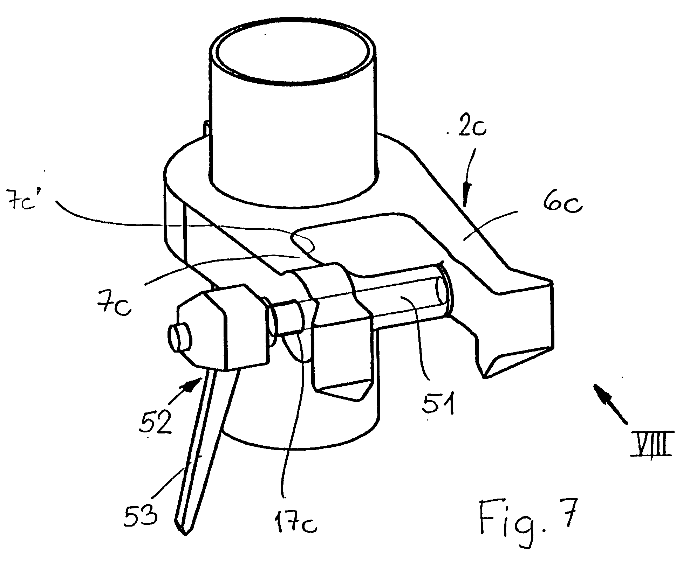

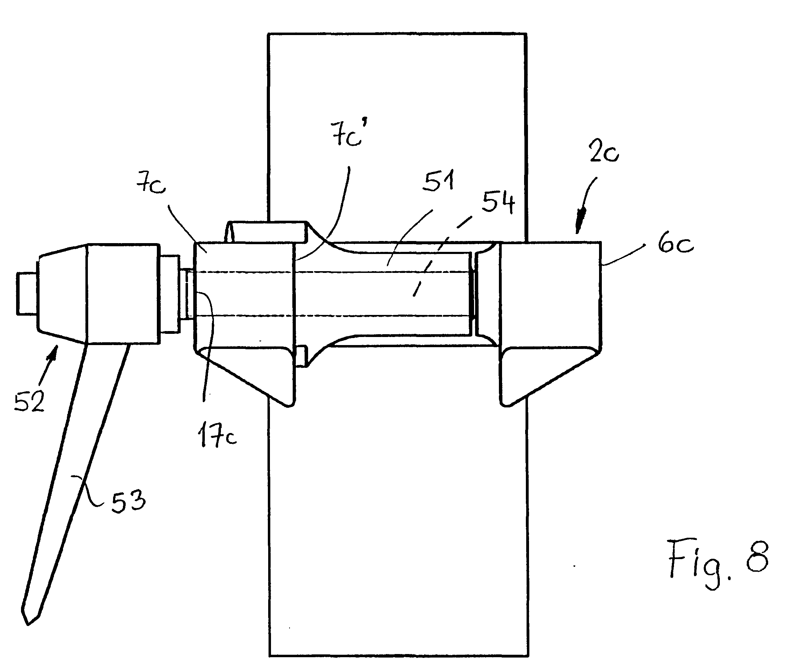

Der Gegenhalter 2c gemäß den Fig. 7 und 8 ist im wesentlichen gleich ausgebildet wie der Gegenhalter 2 nach den Fig. 1 bis 3. Um ein unbeabsichtigtes Zusammendrücken der beiden Schenkel 6c, 7c des Gegenhalters 2c im montierten Zustand zuverlässig zu verhindern, ist an einem der beiden Schenkel, im Ausführungsbeispiel am Schenkel 7c, ein Anschlag 51 vorgesehen, der sich vom Schenkel 7c in Richtung auf den gegenüberliegenden Schenkel 6c erstreckt und mit geringem Abstand von ihm endet. Der Anschlag 51 ist als Hülse ausgebildet, die mit ihrem einen Ende an der ebenen Innenseite 7c' des Schenkels 7c befestigt ist. Die Achse des Anschlages 51 liegt in der Achse der Gewindeöffnung 17c des Schenkels 7c.

In die Gewindeöffnung 17c wird ein Betätigungshebel 52 geschraubt, der als Handhabe 53 einen Arm aufweist, mit dem der Betätigungshebel 52 in die Gewindeöffnung 17c geschraubt werden kann. Hierzu ist der Betätigungshebel 52 mit einem quer zum Arm 53 liegenden Arm 54 versehen, der mit einem (nicht dargestellten) Gewindeabschnitt in die Gewindeöffnung 17c geschraubt wird. Nachdem der Gegenhalter 2c im Halter 1 (Fig. 1 bis 3) montiert ist, wird der Gegenhalter mittels des Betätigungshebels 52 durch Auseinanderspreizen der Schenkel 6c, 7c am Halter 1 verspannt. Der Betätigungshebel 52 wird mit dem Arm 54 so weit durch die Gewindeöffnung 17c in den Anschlag 51 gesteckt, bis der Gewindeabschnitt des Armes 54 in den Bereich der Gewindeöffnung 17c kommt. Nunmehr kann der Betätigungshebel 52 in die Gewindeöffnung 17 geschraubt werden. Das freie Ende des Armes 54 stützt sich dann an der Innenseite des Schenkels 6c ab (Fig. 8). Durch geringfügiges Anziehen des Betätigungshebels 52 werden dadurch die beiden Schenkel 6c, 7c des Gegenhalters 2c auseinandergedrückt und dadurch in der Öffnung 5 des Halters 1 verklemmt. Auf diese Weise ist ein sicherer Halt des Gegenhalters 2c im Halter 1 gewährleistet. Da der Anschlag 51 mit nur sehr geringem Abstand vom Schenkel 6c endet, ist sichergestellt, daß beispielsweise bei nicht ordnungsgemäß geschraubtem Betätigungshebel 52 die Schenkel 6c, 7c nur wenig in Richtung zueinander bewegt werden können. Der Abstand zwischen dem Anschlag 51 und der Innenseite des Schenkels 6c ist nur so groß, daß die Schenkel 6c, 7c bei nicht angezogenem Betätigungshebel 2c nur so weit in Richtung zueinander gebogen werden können, daß der Gegenhalter 2c nicht aus dem Halter 1 rutschen kann. Sollte darum die Bedienungsperson den Betätigungshebel 52 nicht oder nicht ausreichend weit in den Gegenhalter 2c schrauben, ist dennoch gewährleistet, daß der Gegenhalter 2c sicher im Halter 1 sitzt.

Der Anschlag 51 kann selbstverständlich auch bei den Gegenhaltern 2a und 2b vorgesehen sein.

## Patentansprüche

1. Halterung für eine Hebe- und Tragvorrichtung, insbesondere für kranke und behinderte Personen, mit einem ortsfesten Halter (1; 1b; 1c) und einem Gegenhalter (2, 2a bis 2c), der an einem Ständer (4) der Hebe- und Tragvorrichtung angeordnet werden kann und mit mindestens einem, insbesondere schwalbenschwanzartig ausgebildeten Steckteil (14, 15; 14b, 15b) in eine insbesondere schwalbenschwanzförmig ausgebildete Einhängeöffnung (5; 5b; 5c) des Halters (1; 1b; 1c) eingreift, und mit mindestens einem am Halter (1b; 1c) und/oder am Gegenhalter (2; 2a) vorgesehenen Führungsteil (18, 19; 18a, 19a; 36, 37; 36c, 37c),
**dadurch gekennzeichnet, daß** das Führungsteil (18, 19; 18a, 19a) durch mindestens eine Einführnase des Steckteiles (14, 15), das durch das freie Ende eines Schenkels (6, 7; 6b, 7b; 6c, 7c) des Gegenhalters (2, 2a, 2b) gebildet ist, bzw. durch mindestens eine Führungsfläche (36, 37; 36c, 37c) in einer Seitenwand einer Einführöffnung (50;50c) des Halters (1b; 1c) gebildet ist, wobei die Führungsfläche (36, 37; 36c, 37c) unter einem anderen Winkel zur Rückwand (49; 49c) der Einhängeöffnung (5b; 5c) liegt als die Seitenwände (5b', 5b"; 5c', 5c") der Einhängeöffnung (5b; 5c).

2. Halterung nach Anspruch 1,
**dadurch gekennzeichnet, daß** das Führungsteil (18, 19; 18a, 19a) durch zwei Einführnasen des Steckteiles (14, 15) gebildet ist, die durch das freie Ende zweier Schenkel (6, 7; 6b, 7b; 6c, 7c) gebildet sind.

3. Halterung nach Anspruch 1 oder 2,
**dadurch gekennzeichnet, daß** die Einführnase (18, 19; 18a, 19a) eine schräg nach innen und in Einsteckrichtung nach unten geneigte Außenseite (20, 21) aufweist, die mit einer Horizontalebene einen spitzen Winkel (β) einschließt.

4. Halterung nach einem der Ansprüche 1 bis 3,
**dadurch gekennzeichnet, daß** die Stirnflächen (22, 23) der Einführnasen (18, 19) mit den Stirnseiten (14", 15") der Steckteile (14, 15) einen stumpfen Winkel einschließen.

5. Halterung nach Anspruch 3 oder 4,
**dadurch gekennzeichnet, daß** der Übergang (30, 31) von der Stirnfläche (22, 23) in die schräge Außenseite (20, 21) der Einführnase (18, 19; 18a, 19a) einen Abstand (b) von einer Anlagefläche (W) hat, der größer ist als die Dicke (a) des Halters (1) im Bereich des Bodens (5''') der Einhängeöffnung (5).

6. Halterung nach einem der Ansprüche 1 bis 5,
**dadurch gekennzeichnet, daß** die Einführungnasen (18a, 19a) des Gegenhalters (2a) derart nach innen verbreitent sind, daß ihre einander zugewandten Innenseiten (24a, 25a) mit geringem Abstand einander gegenüberliegen.

7. Halterung nach Anspruch 6,
**dadurch gekennzeichnet, daß** die Einführöffnung (50; 50c) durch zwei einander gegenüberliegende Führungsflächen (36, 37; 36c, 37c) seitlich begrenzt ist.

8. Halterung nach Anspruch 6 oder 7,
**dadurch gekennzeichnet, daß** die Einführöffnung (50; 50c) in einem oberen Abschnitt (48; 48c) des Halters (1b; 1c) vorgesehen ist, dessen Höhe vorzugsweise gleich der Höhe des unteren, die Einhängeöffnung (5b; 5c) aufweisenden Abschnittes (47; 47c) des Halters (1b; 1c) ist.

9. Halterung nach einem der Ansprüche 1 bis 8,
**dadurch gekennzeichnet, daß** die Führungsflächen (36, 37; 36c, 37c) stumpfwinklig an die Rückwand (49; 49c) der Einführöffnung (50; 50c) anschließen.

10. Halterung nach einem der Ansprüche 1 bis 9,
**dadurch gekennzeichnet, daß** die Führungsflächen (36, 37) vertikal verlaufen und über horizontale Schulterflächen (51, 52) in die Seitenwände (5b', 5b") der Einhängeöffnung (50) übergehen.

11. Halterung nach einem der Ansprüche 1 bis 9,
**dadurch gekennzeichnet, daß** die Führungsflächen (36c, 37c) schräg nach außen geneigt sind und stumpfwinklig in die Seitenwände (5c', 5c") der Einhängeöffnung (5c) des Halters (1c) übergehen.

12. Halterung nach einem der Ansprüche 1 bis 11,
**dadurch gekennzeichnet, daß** die voneinander abgewandten Außenseiten (14', 15'; 38, 39) der Steckteile (14, 15; 14b, 15b) des Gegenhalters (2; 2a bis 2c) schräg nach außen geneigt verlaufen und vorzugsweise mit den Stirnflächen (14", 15"; 45, 46) der Steckteile (14, 15; 14b, 15b) des Gegenhalters (2; 2a bis 2c) einen spitzen Winkel einschließen, der vorzugsweise dem zwischen den Seitenwänden (5', 5") der Einstecköffnung (5) und der Rückwand (5"') gebildeten Winkel entspricht.

13. Halterung nach einem der Ansprüche 1 bis 12,
**dadurch gekennzeichnet, daß** die Schenkel (6, 7; 6b, 7b; 6c, 7c) des Gegenhalters (2; 2b; 2c) von einem Ringteil (12; 12b) abstehen, mit dem der Gegenhalter (2; 2b; 2c) an der Hebe- und Tragvorrichtung (4) befestigt ist.

14. Halterung nach einem der Ansprüche 1 bis 13,
**dadurch gekennzeichnet, daß** der Halter (1; 1b) beidseitig seiner Einhängeöffnung (5; 5b) für den Gegenhalter (2; 2a bis 2c) jeweils eine Durchgangsöffnung (10, 11; 10b, 11b) für ein Befestigungsteil aufweist.

15. Halterung nach einem der Ansprüche 1 bis 14,
**dadurch gekennzeichnet, daß** zumindest der eine Schenkel (6, 7; 6b, 7b; 6c, 7c) des Gegenhalters (2; 2a bis 2c) durch ein Betätigungselement (52) elastisch verformbar ist.

16. Halterung nach einem der Ansprüche 1 bis 15,
**dadurch gekennzeichnet, daß** am einen Schenkel des Gegenhalters (2; 2a bis 2c) wenigstens ein vorzugsweise hülsenförmiger Anschlag (51) vorgesehen ist, der mit geringem Abstand vom anderen Schenkel endet.

17. Halterung nach Anspruch 15 oder 16,
**dadurch gekennzeichnet, daß** das Betätigungselement (52) in den einen Schenkel des Gegenhalters (2; 2a bis 2c) schraubbar und mit einem Arm (54) gegen den anderen Schenkel drückbar ist.

18. Halterung nach einem der Ansprüche 1 bis 17,
**dadurch gekennzeichnet, daß** die Einführnasen (18, 19; 18a, 19a) in Richtung auf ihr freies Ende verjüngt ausgebildet sind.

## Claims

1. Holder for a lifting and support device, in particular for ill and handicapped people, comprising a fixed holder (1; 1b; 1c) and a counterholder (2, 2a to 2c) which can be positioned on a column (4) of the lifting and support device and with at least one in particular dovetail-like formed plug means (14, 15; 14b,15b) which fits into a in particular dovetail-like formed hang-in opening (5; 5b; 5c) of the holder (1; 1b; 1c), and with at least one guide means (18, 19; 18a, 19a; 36, 37; 36c, 37c), provided at the holder (1b; 1c) and/or at the counterholder (2; 2a),
**characterised in that** the guide means (18, 19; 18a, 19a) is formed by at least one entering nose of the plug means (14, 15), which is formed by the free end of a shank (6, 7; 6b, 7b; 6c, 7c) of the counterholder (2, 2a, 2b), respectively by at least one guide surface (36, 37; 36c, 37c) within a side wall of an insert opening (50, 50c) of the holder (1b; 1 c), whereby the guide surface (36, 37; 36c, 37c) is located at a different angle to the rear wall (49; 49c) of the hang-in opening (5b; 5c) than her side walls (5b', 5b"; 5c', 5c").

2. Holder according to claim 1,
**characterised in that** the guide means (18, 19; 18a, 19a) is formed by two entering noses of the plug means (14, 15) which are formed by the free end of two shanks (6, 7; 6b, 7b; 6c, 7c).

3. Holder according to claim 1 or 2,
**characterised in that** the entering nose (18, 19; 18a, 19a) has an outside surface (20, 21) which slopes inwardly and is inclined downwardly in the plug-in direction being orientated at an acute angel (β) to the horizontal plane.

4. Holder according to any one of claims 1 to 3,
**characterised in that** the front faces (22, 23) of the entering noses (18, 19) is orientated at an obtuse angle to the front faces (14", 15") of the plug means (14, 15).

5. Holder according to claim 3 or 4,
**characterised in that** the transition (30, 31) from the front face (22, 23) to the sloping outside surface (20, 21) of the entering nose (18, 19; 18a, 19a) has a distance (b) to a contact surface (W) which is larger than the thickness (a) of the holder (1) in the area of the bottom (5''') of the hang-in opening (5).

6. Holder according to any of claims 1 to 5,
**characterised in that** the entering noses (18a, 19a) of the counterholder (2a) widen out inwardly in such a way that their inner surfaces (24a, 25a), turned to face each other, are standing at a small distance opposite to each other.

7. Holder according to claim 6,
**characterised in that** the insert opening (50; 50c) is laterally limited by two guide surfaces (36, 37; 36c, 37c), standing opposite to each other.

8. Holder according to claim 6 or 7,
**characterised in that** the insert opening (50; 50c) is provided in an upper section (48; 48c) of the holder (1b; 1c) the height of which is preferably equal to the height of the lower section (47; 47c), which has the hang-in opening (5b; 5c) of the holder (1b; 1c).

9. Holder according to claim 1 to 8,
**characterised in that** the guide surfaces (36, 37; 36c, 37c) join the rear wall (49; 49c) of the insert opening (50; 50c) at an obtuse angle.

10. Holder according to any of claims 1 to 9,
**characterised in that** the guide surfaces (36, 37) run vertically and pass via horizontal surfaces of the shoulders (51, 52) to the side walls (5b', 5b") of the hang-in opening (50).

11. Holder according to any of claims 1 to 9,
**characterised in that** the guide surfaces (36c, 37c) are inclined outwardly and pass to the side walls (5c', 5c") of the hang-in opening (5c) of the holder (1c) at an obtuse angle.

12. Holder according to any of claims 1 to 11,
**characterised in that** the outside surfaces (14', 15'; 38, 39) of the plug means (14, 15; 14b, 15b) of the counterholder (2; 2a to 2c) pointing away from each other run obliquely outwards inclined and are preferably orientated at an acute angle to the front surfaces (14", 15"; 45, 46) of the plug means (14, 15; 14b, 15b) of the counterholder (2; 2a to 2c), which preferably corresponds to the angle, formed between the side walls (5', 5") of the hang-in opening (5) and the rear wall (5"').

13. Holder according to any of claims 1 to 12,
**characterised in that** the shanks (6, 7; 6b, 7b; 6c, 7c) of the counterholder (2; 2b; 2c) project from a ring means (12; 12b) with which the counterholder (2; 2b; 2c) is fastened to the lift and support device (4).

14. Holder according to any of claims 1 to 13,
**characterised in that** the holder (1; 1 b) each has a through opening (10, 11; 10b, 11 b) for a fastening means for the counterholder (2; 2a to 2c) on both sides of its hang-in opening (5; 5b).

15. Holder according to any of claims 1 to 14,
**characterised in that** at least one shank (6, 7; 6b, 7b; 6c, 7c) of the counterholder (2; 2a to 2c) is elasticly deformable by an operating means (52).

16. Holder according to any of claims 1 to 15,
**characterised in that** on one shank of the counterholder (2; 2a to 2c) at least one preferably shell-shaped stop (51) is provided which ends at a small distance to the other shank.

17. Holder according to claim 15 or 16,
**characterised in that** the operation means (52) can be screwed into one shank of the counterholder (2; 2a to 2c) and can be pressed with a branch (54) against the other shank.

18. Holder according to any of claims 1 to 17,
**characterised in that** the entering noses (18, 19; 18a, 19a) are taper-shaped in the direction towards their free end.

## Revendications

1. Moyen d'attache pour un dispositif de levage et de suspension, en particulier pour personnes malades et handicapées avec une attache fixe (1; 1b; 1c) et une contre-attache (2, 2a à 2c), laquelle peut être disposée sur un support (4) du dispositif de levage et de suspension et engrène sur une ouverture de pose (5; 5b; 5c) de l'attache (1; 1b; 1c) en particulier constitué en forme de queue d'aronde avec au moins un moyen d'emmanchement (14, 15; 14b, 15b) et avec au moins un moyen de guidage (18, 19; 18a, 19a; 36, 37; 36c, 37c) prévu à l'attache (1b; 1c) et/ou à la contre-attache (2; 2a),
**caractérisé en ce que** le moyen de guidage (18, 19; 18a, 19a) est constitué par au moins un nez d'entrée du moyen d'emmanchement (14, 15), lequel est constitué par l'extrémité libre d'une branche (6, 7; 6b, 7b; 6c, 7c) de la contre-attache (2, 2a, 2b) respectivement par au moins une surface de guidage (36, 37; 36c, 37c) dans une paroi latérale d'une ouverture d'entrée (50; 50c) d'attache (1b; 1c), et de plus la surface de guidage (36, 37; 36c, 37c) est située sous un autre angle par rapport à la paroi arrière (49; 49c) de l'ouverture de pose (5b; 5c) que les parois laterales (5b', 5b"; 5c', 5c") de l'ouverture de pose (5b; 5c).

2. Moyen d'attache selon revendication 1,
**caractérisé en ce que** le moyen de guidage (18, 19; 18a, 19a) est constitué par deux nez d'entrée du moyen d'emmanchement (14, 15), lesquels sont constitués par l'extrémité libre de deux branches (6, 7; 6b, 7b; 6c, 7c).

3. Moyen d'attache selon revendication 1 ou 2,
**caractérisé en ce que** le nez d'entrée (18, 19; 18a, 19a) présente un côté extérieur (20, 21) incliné en biais vers le dedans et en direction de l'emmanchement incliné vers le bas, lequel est situé sous un angle (β) aigu avec un plan horizontal.

4. Moyen d'attache selon une des revendications 1 à 3,
**caractérisé en ce que** les surfaces avant (22, 23) des nez d'entrée (18, 19) sont situés avec les côtés avant des moyens d'emmanchement (14, 15) sous un angle obtus.

5. Moyen d'attache selon revendication 3 ou 4,
**caractérisé en ce que** le passage (30, 31) de la face avant (22, 23) vers le côté extérieur (20, 21) incliné du nez d'entrée (18, 19; 18a, 19a) a une distance (b) d'une surface de contact (W), laquelle est plus grande que l'épaisseur (a) de l'attache (1) dans la zone du fond (5"') de l'ouverture de pose (5).

6. Moyen d'attache selon une des revendications 1 à 5,
**caractérisé en ce que** les nez d'entrée (18a, 19a) de la contre-attache (2a) s'élargissent de telle manière que leurs côtés intérieurs (24a, 25a) se faisant face se trouvent à une petite distance l'un de l'autre.

7. Moyen d'attache selon revendication 6,
**caractérisé en ce que** l'ouverture d'introduction (50; 50c) est limitée latéralement par deux plans de guidage (36, 37; 36c, 37c) l'un en face de l'autre.

8. Moyen d'attache selon revendication 6 ou 7,
**caractérisé en ce que** l'ouverture d'introduction (50; 50c) est prévue dans une section supérieure (48 ; 48c) de l'attache (1b; 1c), dont la hauteur est de préférence égale à la hauteur de la section (47; 47c) inférieure de l'attache (1b; 1c), où se trouve l'ouverture de pose (5b; 5c).

9. Moyen d'attache selon une des revendications 1 à 8,
**caractérisé en ce que** les plans de guidage (36, 37; 36c, 37c) continuent sous un angle obtus par rapport á la paroi arrière (49; 49c) de l'ouverture d'introduction (50; 50c).

10. Moyen d'attache selon une des revendications 1 à 9,
**caractérisé en ce que** les plans de guidage (36, 37) s'élèvent verticalement et se transforment sur plans d'épaule (51, 52) horizontaux en les parois latérales (5b', 5b") de l'ouverture d'introduction (50).

11. Moyen d'attache selon une des revendications 1 à 9,
**caractérisé en ce que** les plans de guidage (36c, 37c) sont inclinés en biais vers l'extérieur et se transforment à angle obtus en les parois latérales (5c', 5c") de l'ouverture d'introduction (5c) de l'attache (1c).

12. Moyen d'attache selon une des revendications 1 à 11,
**caractérisé en ce que** les côtés extérieurs (14', 15'; 38, 39), opposés l'un à l'autre des moyens d'emmanchement (14, 15; 14b, 15b) de la contre-attache (2; 2a à 2c) vont inclinés en biais vers l'extérieur et forment de préférence avec les surfaces avant (14", 15"; 45, 46) des moyens d'emmanchement (14, 15; 14b, 15b) de la contre-attache (2, 2a à 2c) un angle aigu, lequel correspond de préférence à l'angle formé par les parois latérales (5', 5") de l'ouverture d'entrée (5) et la paroi arrière (5"').

13. Moyen d'attache selon une des revendications 1 à 12,
**caractérisé en ce que** les côtés (6, 7; 6b, 7b; 6c, 7c) de la contre-attache (2; 2b; 2c) dépassent d'une piece en forme d'anneau (12; 12b) avec laquellle la contre-attache (2; 2b; 2c) est fixée au dispositif de levage et de suspension (4).

14. Moyen d'attache selon une des revendications 1 à13,
**caractérisé en ce que** l'attache (1; 1b) présente de deux côtés de son ouverture de pose (5; 5b) pour la contre-attache (2; 2a à 2c) chaque fois une ouverture traversante (10, 11; 10b, 11b) pour un moyen de fixation.

15. Moyen d'attache selon une des revendications 1 à 14,
**caractérisé en ce que** au moins l'un des côtés (6, 7; 6b, 7b; 6c, 7c) de la contre-attache (2; 2a à 2c) peut être déformé élastiquement pour un moyen d'action (52).

16. Moyen d'attache selon une des revendications 1 à 15,
**caractérisé en ce que** à un côté de la contre-attache (2; 2a à 2c) est prévu au moins une butée (51) de préférence en forme de cosse, laquelle se termine à peu distance de l'autre côté.

17. Moyen d'attache selon revendication 15 ou 16,
**caractérisé en ce que** le moyen d'action (52) peut être vissé dans l'un des côtés de la contre-attache (2 ; 2a à 2c) et peut être pressé avec un bras (54) contre l'autre côté.

18. Moyen d'attache selon une des revendications 1 à 17,
**caractérisé en ce que** les nez d'entrée (18, 19; 18a, 19a) présentent un rétrécissement en direction de leur extrémité libre.
